## Europäisches Patentamt

## European Patent Office

## Office européen des brevets

(19)

(11) Veröffentlichungsnummer: **0 167 895**
**B1**

(12)

# EUROPÄISCHE PATENTSCHRIFT

(45) Veröffentlichungstag der Patentschrift:
**05.10.88**

(51) Int. Cl.⁴: **C 21 C 5/56, F 27 B 19/04**

(21) Anmeldenummer: **85107549.9**

(22) Anmeldetag: **19.06.85**

(54) Verfahren und Einrichtung zum Herstellen von Stahl aus Schrott.

(30) Priorität: **23.06.84 DE 3423247**

(43) Veröffentlichungstag der Anmeldung:
**15.01.86 Patentblatt 86/3**

(45) Bekanntmachung des Hinweises auf die Patenterteilung:
**05.10.88 Patentblatt 88/40**

(84) Benannte Vertragsstaaten:
**AT BE CH FR GB IT LI NL SE**

(56) Entgegenhaltungen:
**AT - B - 371 838**
**DE - A - 2 737 441**
**DE - A - 3 219 984**
**DE - B - 2 418 109**
**GB - A - 1 166 391**
**US - A - 3 424 573**

**STAHL UND EISEN, Band 103, Nr. 18, 1983, Seite 854, Düsseldorf, DE; "Kontinuierliche Stahlerzeugung in Japan"**

(73) Patentinhaber: **Dr. Küttner GmbH & Co. KG,
Bismarckstrasse 67, D-4300 Essen 1 (DE)**

(72) Erfinder: **Rachner, Hans-Günther, Dr., Berchemer Weg 8,
D-4300 Essen 18 (DE)**

(74) Vertreter: **Hoormann, Walter, Dr.-Ing. et al, FORRESTER
& BOEHMERT Widenmayerstrasse 4/I,
D-8000 München 22 (DE)**

## Beschreibung

Die Erfindung betrifft ein Verfahren zum Herstellen von Stahl aus Schrott unter Verwendung eines Kupolofens zum Erschmelzen von Roheisen, bei dem zwischen dem aufzubereitenden Schrott und dem erschmolzenen Roheisen eine Koksschicht gebildet wird, in deren Bereich Winddüsen zum Zuführen von Sauerstoff in den Kupolofen münden, und unter Verwendung eines dem Kupolofen nachgeordneten Konverters, in dem das erschmolzene Roheisen durch Zufuhr von Sauerstoff gefrischt wird.

Zum Herstellen von Stahl aus Schrott verwendet man bisher (insbesondere in kleineren Stahlwerken) überwiegend elektrische Lichtbogenöfen. Diese Technologie ist ausgereift und demgemäss – insbesondere auch für die Herstellung von Spezialstählen – an sich befriedigend, nicht jedoch im Hinblick auf die Energiebilanz und damit die für den erforderlichen Energieeinsatz aufzuwendenden Kosten. Diese Kosten haben sich nämlich zunächst einmal durch die in den vergangenen Jahren stark gestiegenen Energiekosten beachtlich erhöht. Ein weiterer Grund für die erhebliche Kostensteigerung bei der elektrischen Stahlerzeugung ist darin begründet, dass die erforderlichen Einrichtungen zum Reinigen der Ofenabgase sowie die Einrichtungen zur Minderung der hohen Betriebsgeräusche ausserdem hohe Investitionen erfordern und sich in entsprechenden Betriebskosten niederschlagen.

Man ist daher in Einzelfällen auch bereits von einer elektrischen Stahlerzeugung mit Lichtbogenöfen abgerückt und hat verschiedene Verfahren mit 100% Stahleinsatz vorgeschlagen und teilweise auch bereits in Betrieb genommen, bei denen feste, flüssige oder gasförmige Brennstoffe als Energieträger Verwendung finden, wobei vorzugsweise mit Kohle, Koks und Sauerstoff gearbeitet wird.

So wird beispielsweise bei einer bekanntgewordenen Arbeitsweise zum Herstellen von Stahl mit ausschliesslichem Stahlschrotteinsatz ein Konverter verwendet, durch dessen Boden fein gemahlene Kohle zusammen mit Sauerstoff durch zwei konzentrische Düsen in das Stahlbad geblasen wird.

Bei einem anderen bekannten Verfahren, welches eine Stahlerzeugung mit verbesserter Wärmenutzung zum Ziel hat und eine Arbeitsweise mit hohem Schrotteinsatz ermöglicht, wird zunächst Roheisen in einen Konverter gefüllt und mit Sauerstoff durch eine horizontal angeordnete Lanze in das Roheisenbad geblasen, wobei das dabei erzeugte, aus dem Roheisenbad austretende Gas noch im Konverter verbrannt wird, um damit zum einen den Konverter bzw. dessen Inhalt zu erwärmen, und zum anderen mit dem dabei entstehenden Rauchgas den in einem Schacht über dem Konverter liegenden Stahlschrott vorzuwärmen (DE-A 3 219 984).

Bei einer derartigen Stahlerzeugung unter Einsatz von Schrott mit vorgeschalteter Schrottvorwärmung ist eine optimale Wärmeausnutzung der beim Prozess entstehenden Wärme schon deswegen nicht möglich, weil die Wärmeaufnahme des Schrotts begrenzt ist. Kommt es nämlich zu einer hohen Schrottvorwärmung im Schacht, so führt dieses insbesondere bei relativ dünnen Schrottstücken zwangsläufig zu einem Verschweissen bzw. Anschmelzen und damit zu einer Blockierung des Schachtes.

Dieses vorbekannte Verfahren ist daher nur für den Einsatz von ausgewähltem Sonderschrott grosser Dicke oder bei Masseln bei Vorwärmtemperaturen bis maximal ca. 600 bis 800°C geeignet, nicht aber für eine Stahlherstellung aus unsortiertem, beliebig anfallendem Schrott, der im allgemeinen auch einen beachtlichen Anteil kleinerer bzw. dünnerer Stücke aufweist.

Bei einem aus der Zeitschrift «Stahl und Eisen», 1983, S. 854, bekannten Verfahren der eingangs beschriebenen Gattung wird in einem zu 100% mit Stahlschrotteinsatz betriebenen Kupolofen Roheisen hergestellt, welches aus dem Kupolofen in einen gesonderten Konverter überführt und in diesem gefrischt wird. Dieses Verfahren arbeitet aber mit getrennten Abgaswirtschaften für den Kupolofen einerseits und den Konverter andererseits. Das Abgas des Konverters wird unabhängig von dem Gichtgas des Kupolofens verbrannt, gereinigt etc., so dass auch bei diesem bekannten Verfahren – ebenso wie bei den weiteren vorstehend beschriebenen Verfahren – keine optimale Ausnutzung der beim Aufbereitungsprozess entstehenden Abwärme innerhalb des Aufbereitungsprozesses möglich ist, da das im Konverter entstehende CO-reiche Abgas dem Prozess nicht erhalten bleibt, sondern nach einer Säuberung anderen Verwendungszwecken zugeführt wird, wofür ein entsprechender Aufwand erforderlich ist und wobei zwangsläufig Verluste entstehen.

Die DE-A 2 737 441 offenbart ein Verfahren zum Aufheizen einer ggf. aus Schrott erzeugten Eisenschmelze unter Verwendung eines Schachtofens, in dem lediglich eine Erwärmung bis in die Nähe des Liquiduspunktes erfolgen soll, während eine Überhitzung der im Schachtofen erzeugten Stahlschmelze erst in einem dem Schachtofen nachgeordneten und mit diesem verbundenen Aufheizraum erfolgen soll, in dessen Bad Brennstoff, insbesondere fester Kohlenstoff, und Sauerstoff geleitet werden. Dabei erfolgt die Erwärmung des eingesetzten Schrottes bis zu dessen Verflüssigung insbesondere durch am unteren Ende des Schachtofens angeordnete Brenner und wird durch eine Verbrennung der im Aufheizraum entstehenden, in den Schachtofen geleiteten Reaktionsgase unterstützt, wobei die gegenseitige Abstimmung so erfolgt, dass es im Schachtofen nicht zu einer Überhitzung der Eisenschmelze kommt, weil man in diesem Fall eine zu starke Oxidation befürchtet.

Das bei der Verbrennung der Reaktionsgase in $CO_2$ umgewandelte CO wird anschliessend auf seinem Weg durch den Schachtofen wenigstens zum Teil wiederum in endothermer Reaktion unter entsprechendem Kohlenstoffverbrauch unkontrolliert zu CO reduziert, ggf. im Bereich der Winddüsen erneut zu $CO_2$ verbrannt und auf seinem weiteren Weg durch den Schachtofen – je nach dem dort vorhandenen Kohlenstoffangebot – erneut unkontrolliert endotherm zu CO reduziert, welches als Bestandteil des Gichtgases aus dem Schachtofen abgeführt wird und dem Prozess mithin verlorengeht. Dabei kann der CO-Anteil des Schachtofengichtgases mithin ggf. so klein sein, dass das Schachtofengichtgas nicht mehr zündfähig ist und demgemäss auch in einer Nachverbrennung nicht mehr energetisch zu nutzen ist, er kann jedoch über einem grossen Kohlenstoffangebot oberhalb der Winddüsen ggf. auch sehr gross sein, so dass das Schachtofengichtgas zwar in einem nachgeschalteten Rekuperator zu verbrennen ist, doch geht in einem solchen Falle dem Prozess ein entsprechend hoher Anteil der eingesetzten Primärenergie verloren.

Der vorliegenden Erfindung liegt die Aufgabe zugrunde, die bekannten Verfahren unter Vermeidung ihrer genannten und weiterer Nachteile so zu verbessern, dass mit ihnen Stahl aus Schrott von weitgehend beliebiger Konsistenz mit einem möglichst niedrigen Energieeinsatz unter optimaler Ausnutzung des eingesetzten Brennstoffes (Koks) für den Aufbereitungsprozess kontinuierlich herzustellen ist, ohne dass es beim Vorheizen des Schrottes zu Verschweissungen od. dgl. von Schrottstücken kommen kann, wobei für die Wärmeaufnahme aus dem vorhandenen Wärmeangebot beim Vorheizen nicht nur keine Beschränkung gegeben sein, sondern planmässig nicht nur ein Schmelzen bis kurz über den Liquiduspunkt, sondern sogleich ein Überhitzen des geschmolzenen Schrottes erfolgen soll, ohne dass es letztlich zu einer übermässigen Oxidierung des zu frischenden Eisens kommt.

Die Lösung dieser Aufgabe erfolgt durch die Merkmale des Anspruchs 1. Bevorzugte Ausgestaltungen sind in den Unteransprüchen beschrieben.

Als Lösung der vorgenannten Aufgabe ist erfindungsgemäss vorgesehen, dass das beim Frischen entstehende CO-reiche Konverterabgas der Koksschicht des Kupolofens zugeführt wird und im Bereich der Winddüsen des Kupolofens in exothermer Reaktion verbrannt wird.

Obwohl es u.a. Ziel der vorliegenden Erfindung ist, den erforderlichen Energieeinsatz möglichst gering zu halten und demgemäss den eingesetzten Koks energetisch optimal für den Aufbereitungsprozess zu nutzen, ist ein verfahrenstechnisch nicht vermeidbarer und zur Schaffung einer reduzierenden Atmosphäre im oberen Teil des eingesetzten Schrottes sogar erforderlicher Rest-CO-Gehalt in dem aus dem Kupolofen abzuführenden Abgas vorhanden, der bevorzugt konstant gehalten wird, und zwar bevorzugt auf einem Wert von ca. 8 bis 14 Vol.-%, was durch eine entsprechende Dosierung der zugegebenen Koksmenge zum metallischen Einsatzmaterial (Schrott) erfolgen kann.

Dieser Massnahme liegt zum einen die bereits angedeutete Überlegung zugrunde, dass es nicht möglich ist, das aus dem Prozess entweichende Abgas völlig CO-frei zu halten, da das bei der Verbrennung des beim Frischen entstehenden, CO-reichen Abgases entstehende $CO_2$ vor dem Entweichen aus dem Aufbereitungsprozess zunächst einmal seine fühlbare Wärme an den aufzubereitenden Schrott abgeben soll und auf seinem Weg zur Gicht des Kupolofens zwangsläufig auf Kohlenstoff trifft, was in einem gewissen Umfang eine Reaktion zu CO zur Folge hat. Zum anderen würde im Falle einer nicht reduzierenden Atmosphäre im oberen Teil der Schrottsäule eine starke Oxidation des Schrottes auftreten, die sich auch nachteilig auf die sich anschliessenden metallurgischen Vorgänge auswirken würde. Steuert man aber den Verfahrensablauf durch Dosieren der Kokszugabe so, dass die Koksschicht oberhalb der Winddüsen nicht zu gross ist, so dass z.B ein CO-Gehalt des aus dem Aufbereitungsprozess abzuführenden Gichtgases von ca. 8 bis 14 Vol.-% vorhanden ist, so erhält man damit bei einer reduzierenden Atmosphäre einen nur geringen C-Verlust für den unmittelbaren Prozess und im übrigen ein zündfähiges Gichtgas, dessen Wärmeinhalt ohne besonders aufwendige Zusatzmassnahmen weitgehend zurückzugewinnen und nutzbringend zu verwenden ist.

Das beim Frischen entstehende Konverterabgas wird der porösen Koksschicht gemäss einer Ausgestaltung der vorliegenden Erfindung unmittelbar im Gegenstrom zu dem dem Frischvorgang zufliessenden, geschmolzenen Roheisen zugeführt oder gemäss einer anderen Ausgestaltung durch eine (von dem Roheisenzufluss separate) Verbindungsleitung, die beispielsweise vom Konverter in den Bereich der Winddüsen führen kann zugeführt.

Gemäss einer besonders bevorzugten Ausgestaltung der vorliegenden Erfindung wird der Sauerstoff der Roheisenschmelze beim Frischen nicht durch Einleiten von Luft zugeführt, sondern das Roheisen wird in an sich bekannter Weise mit reinem Sauerstoff gefrischt, um die Abgasmenge entsprechend klein zu halten, wobei man bei einer solchen Arbeitsweise beim Frischen ein im Bereich der Koksschicht des Kupolofens zu verbrennendes Abgas erreichen kann, welches bis zu 90% und ggf. mehr CO enthält, während der CO-Anteil des beim Frischen mit Luft entstehenden Abgases bei weniger als der Hälfte liegen dürfte.

Weiterhin besteht die Lösung der obigen Aufgabe erfindungsgemäss darin, dass das untere Ende des Kupolofens zum Überführen des erschmolzenen Roheisens mit dem Konverter verbunden ist, und dass zwischen dem Konverter und dem Kupolofen eine Verbindungsleitung vorhanden ist, durch welche das im Konverter beim Frischen entstehende CO-reiche Abgas der Koksschicht des Kupolofens zuzuführen ist, so dass es im Bereich der Winddüsen in exothermer Reaktion zu verbrennen ist, wobei der CO-reiche Abgasstrom aus dem Konverter aber nicht notwendigerweise in einem unmittelbaren Gegenstrom zu dem aus dem Kupolofen in den Konverter fliessenden Roheisen erfolgen muss, sondern in Ausgestaltung der vorliegenden Erfindung über eine separate Verbindungsleitung mit den Winddüsen versehenen Bereich des Kupolofens zugeführt werden kann, um dort verbrannt zu werden.

Im Gegensatz zu dem oben behandelten Stand der Technik wird also erfindungsgemäss der aufzubereitende Schrott mit dem Konverterabgas nicht lediglich vorgewärmt und noch stückig der zu frischenden Schmelze zugeführt, sondern der Schrott wird bereits im Kupolofen geschmolzen und gelangt in flüssiger Form aus dem Kupolofen in den nachgeschalteten Konverter, ohne dass es dabei selbst bei aus dünnen und dicken Schrottteilen unterschiedlichster Konsistenz insbesondere in der Übergangsphase vom festen in den plastischen, teilweise flüssig werdenden Zustand durch Verschweissen dünner Teile, Klumpenbildungen u. dgl. zu den bereits weiter oben beschriebenen Schwierigkeiten kommen kann, da das poröse Koksbett des klassischen Kupolofens dieses wirkungsvoll verhindert. Denn die flüssig werdenden Metallbestandteile des sich über dem Koksbett in der Schmelzzone befindlichen Schrotts tropfen bei der erfindungsgemässen Arbeitsweise durch das Koksbett nach unten, wie dieses vom klassischen Kupolofenbetrieb her an sich bekannt ist, während das im Konverter gebildete Abgas – wenn es dem Kupolofen nicht über eine separate Verbindungsleitung zugeführt wird – durch das Koksbett nach oben gelangen und vor den Winddüsen des Kupolofens verbrannt werden kann, so dass das Koksbett des in Kombination mit einem Konverter erfindungsgemäss zum Einsatz kommenden Kupolofens gleichsam eine filternde Wirkung ausübt, welche die bei der bisherigen Schrottvorwärmung mit unbegrenzter Wärmeaufnahme entstehende Schwierigkeiten mit Sicherheit verhindert.

Dabei nimmt das im Kupolofen bis zum Flüssigwerden erwärmte, dem Konverter zuströmende Roheisen auf seinem Weg durch das Koksbett Kohlenstoff in einer Grössenordnung um 3% auf und bildet damit gleichsam selbst die Energiequelle für das anschliessend im Konverter erfolgende Frischen, wobei das im Konverter entstehende extrem CO-reiche Abgas aber nicht etwa unter $CO_2$-Bildung im Konverter verbrannt wird, sondern es wird erst im Bereich der Winddüsen des Kupolofens in exothermer Reaktion verbrannt. Es dient mithin unter optimaler Ausnutzung des eingesetzten Kokses als Zusatzbrennstoff, wobei es die beim Verbrennen produzierte Wärme ohne Beschränkung an den aufzubereitenden Schrott abgeben kann. Letztlich entweicht lediglich ein nicht vermeidbarer, geringer Rest-CO-Gehalt als Gichtgas aus dem Kupolofen, welches aber bezgl. seines CO-Gehaltes bevorzugt so gesteuert wird, dass es zündfähig und im Rahmen einer Nachverbrennung in einem Rekuperator noch energetisch zu nutzen ist.

Gemäss der erfindungsgemässen Arbeitsweise entsteht mithin weder im Konverter noch auch im Herdbereich des Kupolofens ein nennenswerter Anteil an $CO_2$, so dass das erfindungsgemäss vorgesehene Koksbett von dem Abgas des Konverters durch Abgabe voon Kohlenstoff auch nicht «aufgefressen» wird, wie dieses bei einer CO-Verbrennung im Konverter od. dgl. oder im Schachtofenherd bei bisher vorgeschlagenen Verfahren zwangsläufig der Fall ist.

Um den verfahrensmässigen Ablauf möglichst genau und dabei dennoch möglichst einfach durchführen zu können und schon aus diesem Grunde die jeweils dem Frischen unterworfene Roheisenmenge konstant zu halten, kann zu diesem Zwecke die Auslassöffnung des Konverters zum Ablassen von gefrischtem Stahl aus dem Konverter in der Art eines Siphons ausgebildet sein, wobei die Auslassöffnung bevorzugt so ausgebildet ist, dass die Menge des im Konverter enthaltenen Roheisens durch die Dammhöhe des Siphons bestimmt ist. Entsprechend kann auch mit der Auslassöffnung des Konverters zum Ablassen von Schlacke verfahren werden.

Wie ebenfalls bereits weiter oben unter Bezugnahme auf verfahrenstechnische Massnahmen angedeutet worden ist, kann in Ausgestaltung der vorliegenden Erfindung zwischen dem Kupolofen und dem Konverter nur eine einzige Verbindung vorhanden sein, durch welche einerseits Roheisen und ggf. Schlacke in den Konverter fliessen und andererseits die beim Frischen entstehenden Konverterabgase im Gegenstrom in den Kupolofen strömen. Bei einer Variante können jedoch auch zwei Verbindungen zwischen Kupolofen und Konverter vorgesehen sein, wobei das Roheisen und ggf. Schlacke – sofern diese nicht vorher mittels einer Trenneinrichtung vom Roheisen getrennt wird – durch eine erste Verbindung in den Konverter gelangen, während die beim Frischen entstehenden, CO-reichen Abgase durch eine zweite Verbindungsleitung aus dem Konverter in den Kupolofen strömen.

Der bei Anwendung des erfindungsgemässen Verfahrens erforderliche Energieaufwand ist besonders niedrig, was u.a. Ziel der vorliegenden Erfindung ist. Der bei einem gefutterten Heisswind-Kupolofen erreichbare Kokssatz liegt in der Grössenordnung von 70 bis 75 kg/t, während die bei dem klassischen Kupolofen üblichen Kokssätze bei gefuttertem Betrieb in der Grössenordnung von 100 bis 110 kg/t liegen. Die Differenz zwischen dem praktischen Kokssatz und dem für das Schmelzen erforderlichen Kokssatz muss zugegeben werden, um die Aufkohlung des Roheisens kohlenstoffmässig abzudecken.

Zu Beginn einer erfindungsgemässen Aufbereitungsmassnahme zum Herstellen von Stahl aus Schrott wird zunächst mehr Koks zugegeben als es dem während der kontinuierlichen Betriebes entsprechenden Schmelzkokssatz von beispielsweise ca. 70 kg/t entspricht, und zwar ca. 100 kg Koks/t, wobei die Differenz von ca. 30 kg Koks/t Schrott zur Aufkohlung des entstehenden Roheisens durch Lösung dient. Diese (anfängliche) Differenz des Kokssatzes wird beim Frischen im Konverter ganz überwiegend in CO umgewandelt und demgemäss bei der erfindungsgemässen Betriebsweise als zusätzlicher Brennstoff für den danach aufzubereitenden Schrott gewonnen, so dass man bei dem vorstehenden Ausführungsbeispiel auf Dauer, d.h. nach Erreichen des betrieblichen Beharrungszustandes, dann lediglich noch ca. 70 kg Koks/t Schrott zuzuführen braucht.

Die beim Frischen des Roheisens entstehende Wärme kann ausserdem zum Schmelzen von sog. Zusatzschrott im Konverter verwendet werden, der dem Konverter zugesetzt wird, wenn die Betriebstemperatur im wesentlichen konstant gehalten werden soll, wobei je nach den betrieblichen Gegebenheiten mit einer Zugabe von Zusatzschrott bis zu 150 bis 200 kg/t gerechnet werden muss, für die kein weiterer Energieeinsatz erforderlich ist, so dass der Energieaufwand insgesamt, d.h. also für das Schmelzen von Schrott im Kupolofen und für das zusätzliche Schmelzen von Schrott im Konverter, bei etwa 70 kg/t liegt und mit der vorliegenden Erfindung mithin auch unter energetischen Gesichtspunkten eine Alternative insbesondere für mit Lichtbogenöfen ausgerüstete Stahlwerke gegeben ist, die bereits heute aufgrund hoher Strompreise entsprechend hohe Schmelzkosten haben und in Zukunft mit noch weiter steigenden Strompreisen rechnen müssen, die deutlich über den Schmelzkosten liegen, welche für die erfindungsgemässe Arbeitsweise aufzuwenden sind.

Die Erfindung ist nachstehend an einem Ausführungsbeispiel unter Bezugnahme auf eine der besseren Übersicht halber schematisierte, vereinfachte Zeichnung noch weiter erläutert.

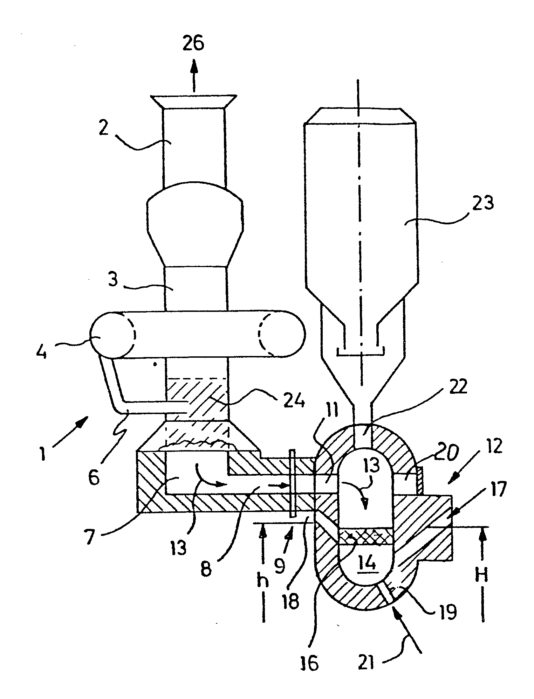

Die Zeichnung zeigt eine erfindungsgemäss verwendete Einrichtung zum Herstellen von Stahl aus Schrott mit einem im ganzen mit 1 bezeichneten Kupolofen, der an seinem die Gicht enthaltenden oberen Abschnitt 2 eine im einzelnen nicht dargestellte Einwurföffnung für das aus Schrott und Koks bestehende Einsatzmaterial aufweist. Etwa im mittleren Abschnitt des Kupolofens 1 wird der Schacht 3 in an sich bekannter Weise konzentrisch von einem Windmantel 4 umgeben, von dem aus Winddüsen 6 unterhalb des Windmantels 4 im Bereich einer sog. Überhitzungszone durch den Schachtmantel geführt sind, unterhalb welcher sich im Ofenherd die sog. Sammelzone 7 befindet, von der bei separater Verwendung eines derartigen Kupolofens 1 eine Abstichöffnung abgeht. Diese Öffnung 8 ist bei der in der Zeichnung dargestellten Einrichtung aber nicht geschlossen, sondern geht mittels einer Verbindung 9 in einen Einlass 11 eines im ganzen mit 12 bezeichneten Konverters über, so dass das im Kupolofen 1 geschmolzene Roheisen gemäss den Pfeilen 13 aus dem Kupolofen 1 in den Konverter 12 fliesst und dort ein im wesentlichen aus Roheisen 14 und Schlacke 16 bestehendes Bad bildet.

Der Konverter 12 besitzt eine als Siphon ausgebildete Auslassöffnung 17 für das Roheisen 14 sowie eine ebenfalls siphonartig ausgebildete Auslassöffnung 18 für die Schlacke 16, so dass der maximale Inhalt des Konverters jeweils durch die Dammhöhe H bzw. h zu beschränken und damit der Inhalt des Konverters 12 insoweit konstant zu halten ist. Über der Auslassöffnung 17 befindet sich eine Inspektionsöffnung 20.

Der Konverter 12 weist weiterhin wenigstens eine Öffnung 19 auf, durch welche von aussen her Sauerstoff gemäss dem Pfeil 21 in die im Konverter 12 befindliche Schmelze zu leiten ist, um das Roheisen 14 zu frischen.

Schliesslich besitzt der Konverter 12 noch eine Einwurföffnung 22, durch welche aus einem Vorratsbehälter 23 Zusatzschrott und/oder gebrannter Kalk in den Konverter 12 zu geben ist, um die Betriebstemperatur im Konverter 12 bzw. die Basizität der Schlacke im wesentlichen konstant zu halten.

Das beim Frischen gebildete, im wesentlichen aus CO bestehende Konverterabgas strömt entgegen den Pfeilen 13 aus dem Konverter 12 in den Kupolofen 1 und gelangt dabei mithin durch die Öffnung 8 und die Sammelzone 7, d.h. also insgesamt durch den sog. Ofenherd, zu dem im Kupolofen 1 befindlichen Koksbett, welches sich ca. 1 bis 2 m von den Winddüsen 6 nach oben und unten erstreckt, sich also zwischen dem bereits flüssigen, zum Konverter 12 laufenden Roheisen und dem darüber befindlichen, noch nicht geschmolzenen Schrott befindet. Das Koksbett 24 hat vor den Winddüsen 6 eine Temperatur von ca. 2000–2500°C, so dass das geschmolzene Eisen, welches – abhängig von seinem Gehalt von C, Si etc. – eine erheblich niedrigere Schmelztemperatur aufweist, auf seinem abtropfenden Weg durch das Koksbett, auf dem es etwa 2–3% Kohlenstoff aufnimmt, auf ca. 1500°C überhitzt wird und in diesem überhitzten Zustand in den Konverter 12 gelangt. Dabei findet aber keine im Stand der Technik be- und gefürchtete bleibende übermässige Oxidation des Eisens statt, da gebildetes Eisenoxid mit dem reichlich vorhandenen Kohlenstoff zu Fe und CO reagiert, wobei ersteres in den Konverter 12 läuft und letzteres im Kupolofen 1 vor dessen Winddüsen 6 verbrannt wird. Da das CO-reiche Konverterabgas keinen nennenswerten $CO_2$-Anteil enthält, findet beim Durchströmen des Koksbettes 24 zunächst praktisch keine Reaktion statt. Erst im Bereich der Winddüsen 6 wird das Konverterabgas in exothermer Reaktion zu $CO_2$ verbrannt und gibt dabei die beim Verbrennungsvorgang entstehende Wärme überwiegend an den zu schmelzenden Schrott ab, dessen bei dem Schmelz- und anschliessenden Überhitzungsvorgang entstehende Metalltröpfchen unter Aufkohlung von ca. 3% durch das gleichsam als Filter wirkende Koksbett durch dieses hindurch nach unten tropfen und sodann aus der Sammelzone 7 gemäss den Pfeilen 13 in den Konverter 12 gelangen, während im Gegenstrom das CO-reiche Abgas des Konverters 12 durch das Koksbett nach oben strömt.

Eine gewisse Reduktion des bei der CO-Verbrennung an den Winddüsen 6 entstehenden $CO_2$

bei dessen Aufstieg in die Gicht ist nicht zu vermeiden, wobei der CO-Anteil des Kupolofengichtgases bei dem dargestellten Ausführungsbeispiel auf 12 Vol.-% durch entsprechende Kokszugabe gesteuert wird, so dass das Gichtgas des Kupolofens, welches diesen in Richtung des Pfeiles 26 verlässt, zündfähig ist und demgemäss über eine nicht dargestellte Verbindungsleitung einer entsprechenden Wärmenutzung zugeführt werden kann.

**Patentansprüche**

1. Verfahren zum Herstellen von Stahl aus Schrott unter Verwendung eines Kupolofens zum Erschmelzen von Roheisen, bei dem zwischen dem aufzubereitenden Schrott und dem erschmolzenen Roheisen eine Koksschicht gebildet wird, in deren Bereich Winddüsen zum Zuführen von Sauerstoff in den Kupolofen münden, und unter Verwendung eines dem Kupolofen nachgeordneten und mit diesem verbundenen Konverters, in dem das erschmolzene Roheisen durch Zufuhr von Sauerstoff gefrischt wird, mit der Massgabe, dass das beim Frischen entstehende CO-reiche Konverterabgas im Gegenstrom der Koksschicht des Kupolofens zugeführt und im Bereich der Winddüsen exotherm verbrannt wird, dass dabei das abtropfende Roheisen auf ca. 1500°C überhitzt wird, und dass der CO-Gehalt des aus dem Kupolofen austretenden Abgases durch entsprechend dosierte Zugabe von Koks auf einen Wert von 8 bis 14 Vol.-% konstant gehalten wird.

2. Verfahren nach Anspruch 1, dadurch gekennzeichnet, dass das Konvertergas der Koksschicht im Gegenstrom zu dem aus dem Kupolofen in den Konverter abfliessenden Roheisen zugeführt wird, so dass es die Koksschicht von unten nach oben durchströmt.

3. Verfahren nach Anspruch 1, dadurch gekennzeichnet, dass das Konverterabgas der Koksschicht getrennt von dem aus dem Kupolofen in den Konverter abfliessenden Roheisen zugeführt wird.

4. Verfahren nach einem oder mehreren der vorhergehenden Ansprüche, dadurch gekennzeichnet, dass das Roheisen im Konverter mit reinem Sauerstoff gefrischt wird.

**Claims**

1. A process for the manufacture of steel from scrap using a cupola furnace for melting pig iron, in which process a layer of coke is formed between the scrap for preparation and the melted pig iron, blast tuyeres for supplying oxygen to the cupola furnace leading into the zone of said layer of coke, and using a converter following and connected to the cupola furnace, in which converter the melted pig iron is refined by the supply of oxygen, wherein the CO-rich converter waste gas forming during refining is fed in counter-current to the cupola furnace coke layer and is burned exothermically in the zone of the blast tuyeres, the dripping pig iron being superheated to about 1500°C, and the CO-content of the waste gas leaving the cupola furnace is kept constant at a value of 8 to 14% by volume by an appropriately metered addition of coke.

2. A process according to claim 1, characterised in that the converter gas is fed to the layer of coke in counter-current to the pig iron flowing out of the cupola furnace into the converter so that it flows upwardly from below through the coke layer.

3. A process according to claim 1, characterised in that the converter waste gas is fed to the coke layer separately from the pig iron flowing from the cupola furnace into the converter.

4. A process according to one or more of the preceding claims, characterised in that the pig iron is refined in the converter with pure oxygen.

**Revendications**

1. Procédé de fabrication d'acier à partir de riblons en utilisant un cubilot pour fondre la fonte, dans lequel on forme, entre les riblons à traiter et la fonte à fondre, une couche de coke, dans le voisinage de laquelle débouchent des tuyères à vent pour amener de l'oxygène dans le cubilot, et en utilisant un convertisseur disposé à la suite du cubilot et relié à lui, dans lequel on affine la fonte fondue par amenée d'oxygène sous réserve que les gaz d'échappement du convertisseur, riches en CO, soient amenés à contre-courant de la couche de coke du cubilot et soient brûlés exothermiquement au voisinage des tuyères à vent, que la fonte y dégouttant soit surchauffée à environ 1500°C et que la teneur en CO du gaz d'échappement sortant du cubilot soit maintenue constante, à une valeur de 8 à 14 volumes %, par addition de coke dosée de façon correspondante.

2. Procédé selon la revendication 1, caractérisé par le fait qu'on amène le gaz de convertisseur à la couche de coke à contre-courant de la fonte découlant du cubilot dans le convertisseur, de manière qu'il traverse la couche de coke d'en dessous vers le dessus.

3. Procédé selon la revendication 1, caractérisé par le fait que l'on amène le gaz d'échappement du convertisseur à la couche de coke séparemment de la fonte s'écoulant du cubilot dans le convertisseur.

4. Procédé selon l'une des revendications précédentes, caractérisé par le fait qu'on affine la fonte dans le convertisseur avec de l'oxygène pur.